# EUROPEAN PATENT SPECIFICATION

(11) **EP 1 603 124 B1**
(45) Date of publication and mention of the grant of the patent: **25.06.2008**
(21) Application number: 04021496.7
(22) Date of filing: 09.09.2004
(51) Int. Cl.: G11B 7/007, G11B 7/09, G11B 23/40

(54) **Disk drive and method of controlling position of pickup**
Plattenlaufwerk und Verfahren zur Positionskontrolle des Abtastgeräts
Unité de disque optique et méthode de controller la position de la tête de lecture optique

(30) Priority: 31.05.2004 JP 2004161422
(43) Date of publication of application: 07.12.2005
(73) Proprietor: KABUSHIKI KAISHA TOSHIBA, Tokyo 105-8001 (JP)
(72) Inventor: Nakane, Hiroshi, Minato-ku Tokyo 105-8001 (JP); Kinoshita, Masakatsu, Minato-ku Tokyo 105-8001 (JP)
(74) Representative: Henkel, Feiler & Hänzel

(56) References cited:
- EP-A- 1 308 938
- US-A1- 2002 191 517
- US-A1- 2003 108 708

## Description

The present invention relates to an optical disk apparatus which records information and a visible image in an optical disk capable of recording a visible image on one surface of the disk using laser beam.

In recent years, as well known, optical disks such as CDs and DVDs have spread as information recording media. Examples of CDs include a read-only CD-ROM, a write-once (write-once at the same region in a disk) CD-R, a rewritable CD-RW, and examples of DVDs include a read-only DVD-ROM, a write-once DVD-R, a rewritable DVD-RAM, DVD-RW. A recording type optical disk, that is, a write-once or rewritable optical disk has an information recording layer. The recording capacity of the information recording layer is, for example, about 700 MB in the CD-R, or about 4.7 GB in DVD-R.

Characters or logos indicating the type or the like of a recording type optical disk are, for example, silk-screen printed on a label surface on a side opposite to that of an information recording layer of the disk. An optical disk including a label surface on which the characters or pictures can be recorded by an ink jet printer or handwriting has also become popular.

In recent years, documents on an optical disk and an optical disk apparatus capable of recording pictures or characters on a label surface using laser beam have been published, for example, in Jpn. Pat. Appln. KOKAI Publication No. 2002-203321.

When characters or pictures are printed on the label recording surface printable by the laser beam as described above in the optical disk apparatus capable of recording information, a focus error signal having a sufficient S/N cannot be obtained, because
a reflectance of the label recording surface is generally low. Thus, a focusing cannot be easily performed. Since there is no track in the label recording surface, servo tracking cannot be performed.

Therefore, to set tracks of a concentric circle in the recording with respect to the label recording surface, a pickup needs to be positioned precisely in a radial direction of the disk. In this case, a track pitch needs to be about 20 µm or less in order to secure a recording quality level, and precision needs to be about ±5 µm.

In order to correctly control the position of the pickup on the label recording surface, a new position control circuit is generally required. This complicates a circuit constitution, and involves a cost increase of the device.

US 2002/0191517 A discloses a visible light characteristic changing layer formed from photosensitive or heat-sensitive material which is formed in a location which can be viewed from a part of a label surface of an optical disk. The optical disk is set on a turntable of an optical disk unit while the label surface of the optical disk is directed downward. The optical disk and an optical pickup are moved mutually along the plane of the optical disk. In synchronism with the relative movement, the power of a laser beam output from the optical pickup is modulated in accordance with image data, such as characters or graphic images to be printed, and the laser beam is emitted onto the visible light characteristic changing layer. As a result of the visible light characteristic changing layer being exposed to the laser beam, a visible-light reflectivity of the visible light characteristic changing layer is changed, thereby forming a image corresponding to the image data on the label surface.

An object of the present invention is to provide an optical disk apparatus capable of recording
a visible image on an optical disk printable by laser beam, in which a position of a pickup in a radial direction of the disk on a label recording surface can be easily controlled without using any new position control circuit.

The above object is achieved by an optical disk apparatus according to claim 1. The dependent claims are directed to further advantageous aspects of the invention.

In an optical disk apparatus capable of recording a visible image on an optical disk printable by laser beam, a tracking control circuit which performs tracking in an information recording surface is also used as a pickup position control circuit in a label recording surface on a side opposite to the information recording surface. When settings of circuit elements such as a digital equalizer and an LPF constituting the tracking control circuit are changed, a feed motor control circuit can be constituted.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a whole constitution of an optical disk apparatus to which the present invention is applied;
FIG. 2 is a diagram showing a schematic constitution of a position control mechanism of a pickup 65;
FIG. 3 shows an example of an output waveform of a photo interrupter 41;
FIG. 4 shows a scale 42, an arrangement example of photo detectors constituting the photo interrupter 41, and a detection signal waveform;
FIG. 5A is a diagram showing another constitution example of the position control mechanism of the pickup 65, and FIG. 5B shows rotation detection signals;
FIG. 6 is a block diagram showing a constitution of one embodiment of a feed motor control section 88a according to the present invention;
FIG. 7 is a flowchart of an example of an operation of the optical disk apparatus according to the present invention;
FIG. 8 is a block diagram showing a second embodiment of the feed motor control circuit according to the present invention; and
FIG. 9 is a block diagram showing a third embodiment of the feed motor control circuit according to the present invention.

Embodiments of the present invention will be described hereinafter with reference to the drawings.

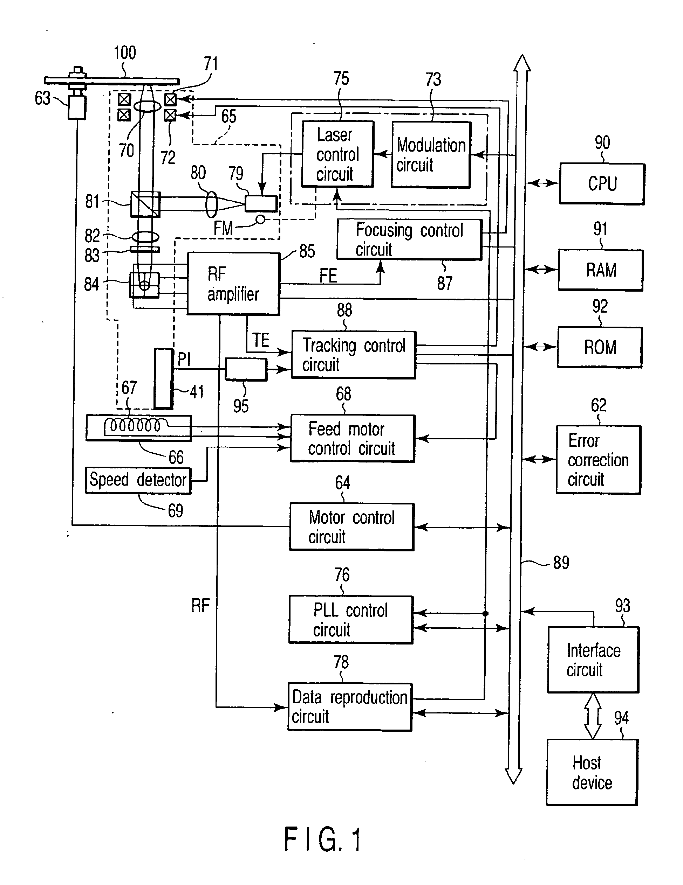

FIG. 1 is a block diagram showing a constitution of an optical disk recording/reproducing device to which one embodiment of the present invention is applied.

Land tracks and groove tracks are formed into a spiral form on the surface of the optical disk 100. The disk 100 is rotated/driven by a spindle motor 63. The information is recorded and reproduced with respect to the optical disk 100 by an optical pickup head (PUH) 65. The optical pickup head 65 is connected to a feed motor 66 via a gear, and the feed motor 66 is controlled by a feed motor control circuit 68.

A speed detection circuit 69 is connected to the feed motor control circuit 68, and a speed signal of the optical pickup head 65 detected by the speed detection circuit 69 is sent to the feed motor control circuit 68. A permanent magnet (not shown) is fixed in the feed motor 66, a driving coil 67 is energized by the feed motor control circuit 68, and accordingly the optical pickup head 65 moves in a radial direction of the optical disk 100.

An objective lens 70 supported by a wire or a leaf spring (not shown) is disposed in the optical pickup head 65. The objective lens 70 is movable in a focusing direction (optical axial direction of the lens) by the driving of a driving coil 72, and is movable in a tracking direction (direction crossing an optical axis of the lens at right angles) by the driving of a driving coil 71.

A modulation circuit 73 subjects user data supplied from a host device 94 via an interface circuit 93, for example, to 8-14 modulation (EFM) to provide EFM data at the time of the recording of the information. A laser control circuit 75 supplies a writing signal to a laser diode 79 based on the EFM data supplied from the modulation circuit 73 at the time of the recording of the information (forming of a marks). The laser control circuit 75 supplies a reading signal smaller than the writing signal to the laser diode 79 at the time of the reading of the information.

A front monitor FM constituted of a photo diode detects a quantity, that is, a light emitting power of laser beam produced by the laser diode 79, and supplies a detected current to the laser control circuit 75.
The laser control circuit 75 controls the laser diode 79 in such a manner as to emit the light with the laser power set by a CPU 90 for the time of the reproducing/recording, based on the detected current from the front monitor FM.

The laser diode 79 produces the laser beam in response to a signal supplied from the laser control circuit 75. The laser beam emitted from the laser diode 79 is applied onto the optical disk 100 via a collimator lens 80, a half prism 81, and the objective lens 70. Reflected light from the optical disk 100 is guided to a photo detector 84 via the objective lens 70, the half prism 81, a condenser lens 82, and a cylindrical lens 83.

The photo detector 84 is constituted of, for example, four divided photo detecting cells, and detection signals of these photo detection cells are output to an RF amplifier 85. The RF amplifier 85 processes signals from the photo detection cells to produce a focus error signal FE indicating an error from an in-focus position, a tracking error signal TE indicating an error between a center of a beam spot of laser beam and a center of the track, and an RF signal which is a total added signal of photo detection cell signals.

The focus error signal FE is supplied to a focusing control circuit 87. The focusing control circuit 87 produces a focus driving signal in response to the focus error signal FE. The focus driving signal is supplied to the driving coil 71 in the focusing direction. Accordingly, focus servo is performed in such a manner that the laser beam is constantly exactly focused on the recording film of the optical disk 100.

The tracking error signal TE is supplied to a tracking control circuit 88. The tracking control circuit 88 produces a track driving signal in response to the tracking error signal TE. The track driving signal output from the tracking control circuit 88 is supplied to the driving coil 72 in the tracking direction. Accordingly, tracking servo is performed to constantly trace the laser beam on the track formed in the optical disk 100.

It is to be noted that the tracking control circuit 88 also functions as a feed motor control circuit which controls the feed motor 66 at the time of recording with respect to a label surface as described later. At the time of the recording with respect to the label surface, with movement of the pickup 65,
a photo interrupter signal PI is produced from a photo interrupter 41 attached to the pickup 65. A difference signal production section 95 produces, for example,
a positional error signal from the present position of the pickup 65 to a target position thereof based on the photo interrupter signal PI. A position of the pickup 65 in a disk radial direction is controlled based on the positional error signal.

When the focus servo and the tracking servo are performed, changes of the reflected light from pits or marks formed on the track of the optical disk 100 in accordance with recorded information are reflected in the total added signal RF of the output signals of the respective photo detection cells of the photo detector 84. The signal is supplied to a data reproduction circuit 78. The data reproduction circuit 78 reproduces recorded data based on a reproducing clock signal from a PLL control circuit 76.

While the objective lens 70 is controlled by the tracking control circuit 88, the feed motor 66 that is the PUH 65 is controlled by the feed motor control circuit 68 in such a manner as to position the objective lens 70 in the vicinity of a predetermined position in the PUH 65.

A motor control circuit 64, the feed motor control circuit 68, the laser control circuit 75, the PLL control circuit 76, the data reproduction circuit 78, the focusing control circuit 87, the tracking control circuit 88, an error correction circuit 62 and the like are controlled by the CPU 90 via a bus 89. The CPU 90 generally controls the recording/reproducing device in accordance with an operation command provided from the host device 94 via the interface circuit 93. The CPU 90 uses a RAM 91 as a working area, and performs a predetermined operation in accordance with control programs including a program recorded in a ROM 92 according to the present invention. A feed motor control of the pickup which moves on a disk label recording surface according to the present invention will be described hereinafter.

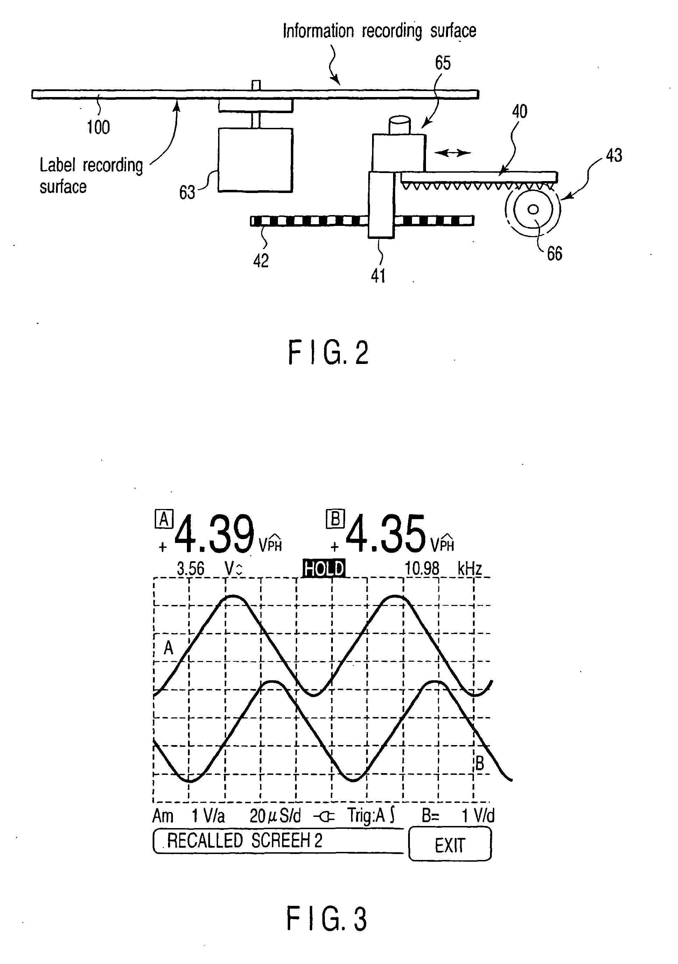

FIG. 2 is a diagram showing a schematic constitution of a position control mechanism of the pickup 65.

The optical disk 100 is attached to the disk motor 63 with its label recording surface directed downwards (usual information recording surface directed upwards).

A so-called biaxial actuator for focusing/tracking is mounted on the pickup 65. The pickup 65 is attached to a rack 40, and the photo interrupter 41 is attached to the pickup 65. When the feed motor 66 rotates,
a gear 43 attached to the feed motor 66 rotates, and the rack 40, pickup 65, and photo interrupter 41 move in a left or right direction in the figure. A scale 42 is fixed to a device main body. When the pickup 65 moves in the right/left direction, a signal corresponding to a graduation of the scale 42 is produced from the photo interrupter 41.

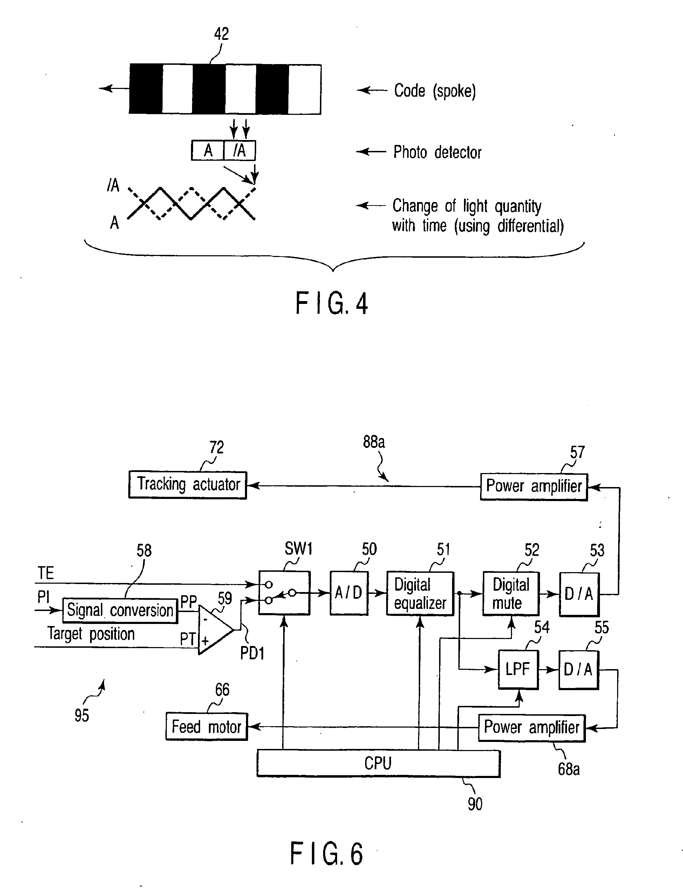

FIG. 3 shows one example of an output waveform of the photo interrupter 41. The rotation of the feed motor 66 (the position of the pickup 65 in a radial direction of the disk) is controlled based on an output signal of the photo interrupter. FIG. 4 shows the scale 42, an arrangement example of photo detectors constituting the photo interrupter 41, and a detection signal waveform.

For example, a DC motor or a stepping motor can be used as the feed motor 66. To raise a positioning precision by the feed motor 66, a speed feedback is preferably performed in the DC motor, and a speed control by V→F conversion is preferable in the stepping motor. Even when either motor is used, needless to say, a speed control system is used, so that a steady-state positional deviation can be eliminated.

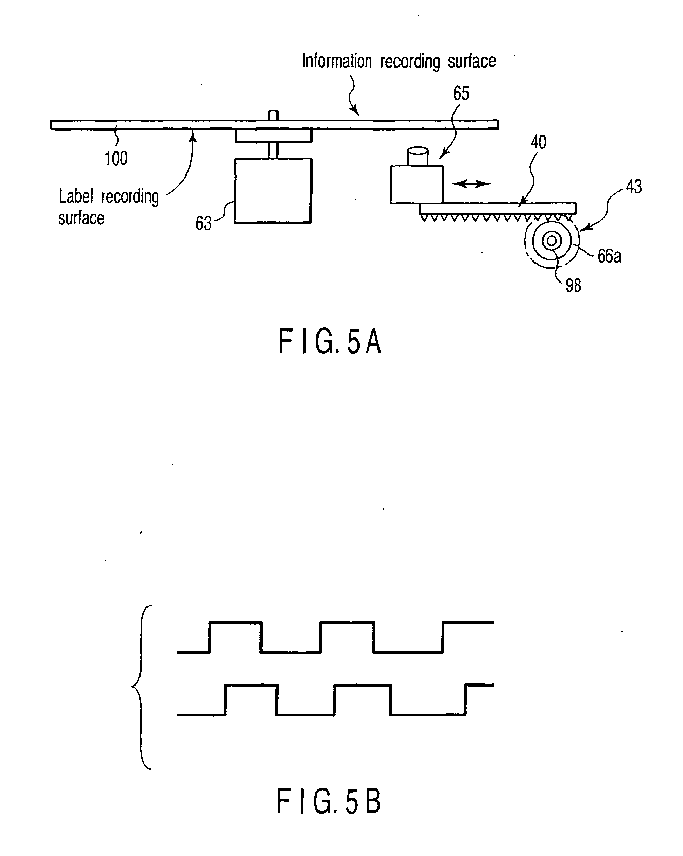

FIG. 5A is a diagram showing another constitution example of the position control mechanism of the pickup 65.

In this example, the photo interrupter 41 and the scale 42 shown in FIG. 2 are not used. A rotary encoder 98 is incorporated in a feed motor 66a. In response to the rotation of the feed motor 66a, the rotary encoder 98 outputs rotation detection signals of two sequences whose phases are different from each other as shown in FIG. 5B. The rotation detection signal is supplied to a signal conversion section 58, and converted into a signal PP indicating the position of the pickup 65.

FIG. 6 is a block diagram showing a constitution of one embodiment of a feed motor control section 88a according to the present invention.

The feed motor control section 88a corresponds to the tracking control circuit 88 of FIG. 1. That is, the tracking control circuit 88 functions as the feed motor control section 88a, when a visible image is recorded in the label recording surface. In this case, settings of circuit elements constituting the tracking control circuit are changed. The feed motor control section 88a provides to the feed motor control circuit 68 a control signal suitable for label recording.

The difference signal production section 95 includes the signal conversion section 58 and a differential circuit 59. The signal conversion section 58 converts the output signal PI of the photo interrupter 41 into the signal PP indicating the position of the pickup. The differential circuit 59 detects a difference between the position signal PP and a target position signal PT from the CPU 90 to provide a pickup positional error signal PD1.

A switching unit SW1 selects one of the positional error signal PD1 and a tracking error signal TE. The switching unit SW1 selects the tracking error signal TE at the time of recording/reproducing with respect to the information recording surface, and selects the positional error signal PD1 at the time of the recording with respect to the label surface. The signal selected by the switching unit SW1 is A/D converted by an A/D converter 50, and a digital signal is processed by a digital equalizer 51.

A digital muting section 52 mutes an output signal of the digital equalizer 51 at the time of the recording with respect to the label surface. A D/A converter 53 D/A converts an output signal of the digital muting section 52, and a power amplifier 57 amplifies a power of an output analog signal of the D/A converter 53. A low pass filter (LPF) 54 filters an output signal of the digital equalizer 51, and
the filtered output signal is D/A converted by a D/A converter 55. An output analog signal of the D/A converter 55 is power-amplified by a power amplifier 68a provided in the feed motor control circuit 68 and supplied to the feed motor 66.

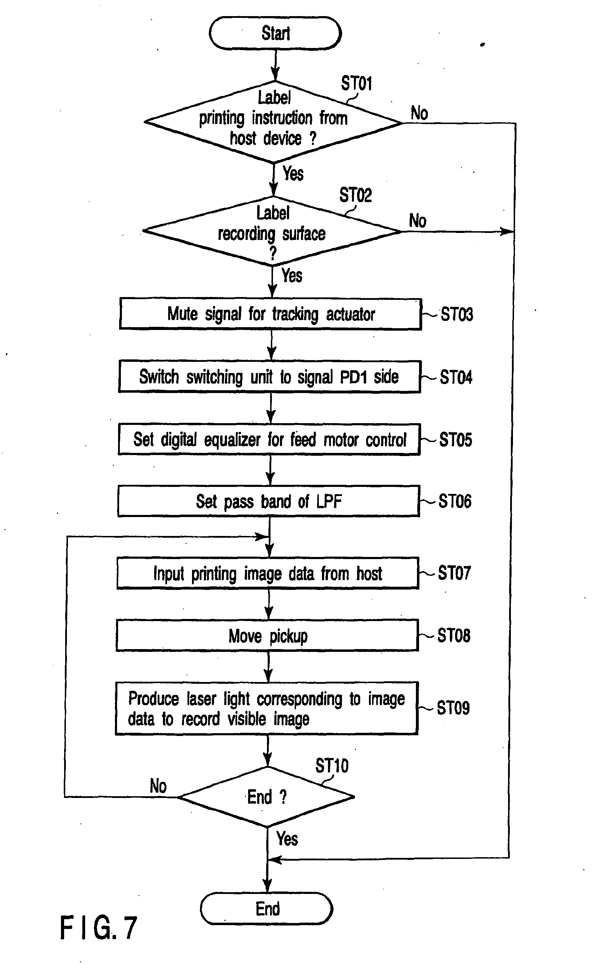

FIG. 7 is a flowchart showing an example of
an operation of the optical disk apparatus according to the present invention.

When there is a label printing instruction from the host device 94 (YES in ST01), the CPU 90 judges whether or not the disk is attached with its label recording surface directed downwards (ST02). For example, an innermost peripheral region of the disk is read to perform the judgment based on data contents. Next, a signal for the tracking actuator is muted using the digital muting section 52 (ST03), and the switching unit SW1 is switched to an input side of the error signal PD1 (ST04). The digital equalizer 51 is set for controlling the feed motor (ST05), and a pass band of the LPF 54 capable of changing a gain is set to a pass band suitable for the feed motor control (ST06).
As a result, an operation mode is switched to the feed motor control from the tracking control.

When image data for printing is input from the host device 94 (ST07), the CPU 90 supplies the target position PT corresponding to a track number of each track on which the visible image is to be printed to the feed motor control section 88a, and the feed motor 66 is rotated to move the pickup 65 (ST08). When the pickup 65 reaches the target position, the laser beam corresponding to the image data input from the host device is produced from a laser semiconductor 79, and the visible image is recorded in the label recording surface (ST09). In this case, a track pitch is set to about 20 µm or less in order to secure a recording quality level.

Since the digital control circuit 88a for use in the feed motor control at the time of the label recording is shared with the tracking control circuit in this manner, a new circuit for recording the image in the label recording surface can be omitted to make possible simplification of a circuit constitution, securing of reliability, and reduction of costs.

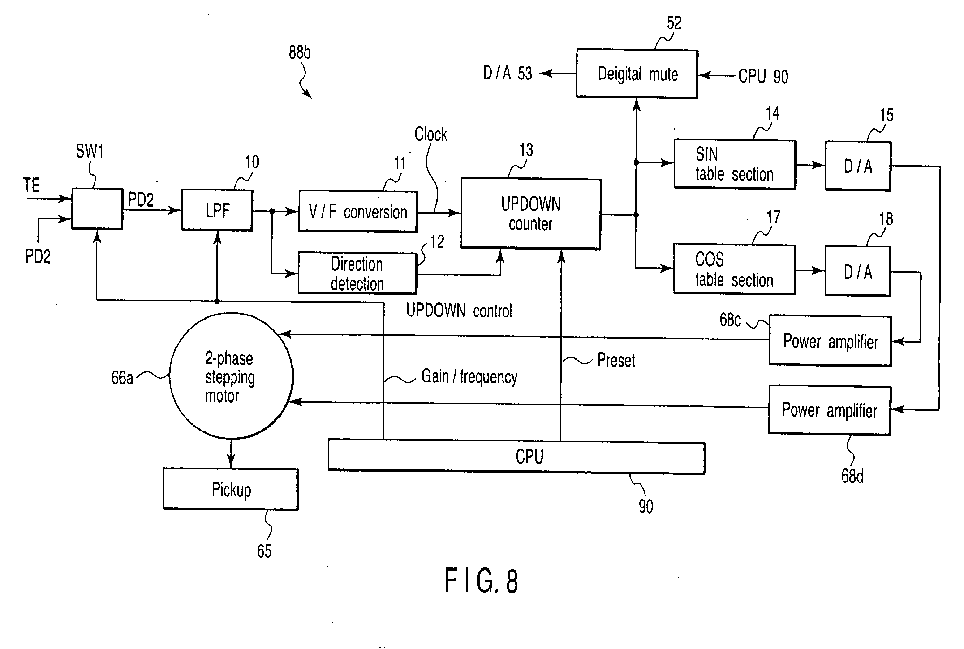

FIG. 8 is a block diagram showing a second embodiment of the feed motor control circuit. This embodiment is suitable for a case where a stepping motor 66a is used as the feed motor 66.

A difference signal PD2 is input into a feed motor control section 88b via the switching unit SW1. The feed motor control section 88b includes: an LPF 10 which filters the difference signal PD2 supplied from the switching unit SW1; a V/F converter 11 which V/F (voltage/frequency) converts an output signal of the LPF 10; a direction detection section 12 which detects a moving direction of the pickup 65 from the output signal of the LPF 10; and an up/down counter 13 which counts the number of clocks of an output clock signal of the V/F converter 11 based on an output direction signal of the direction detection section 12.

Moreover, the feed motor control section 88b includes: an SIN table section 14 which converts an output count value of the up/down counter 13 into a phase value using an SIN table; a D/A converter 15 which D/A converts an output signal of the SIN table section 14; and a power amplifier 68d which amplifies the power of an output analog signal of the D/A converter 15. Furthermore, the feed motor control section 88b includes: a COS table section 17 which converts the output count value of the up/down counter 13 into a phase value using a COS table; a D/A converter 18 which D/A converts an output signal of the COS table section 17; and a power amplifier 68c which amplifies the power of an output analog signal of the D/A converter 18.

The output value of the up/down counter 13 is supplied as address data to the SIN table section 14 and the COS table section 17. The phase of an output values of the SIN table section 14 and COS table section 17 deviate from each other by 90°. The output value of the SIN table section 14 is supplied to one phase coil of a 2-phase stepping motor 66a via the D/A converter 15 and power amplifier 68d, and the output value of the COS table section 17 is supplied to the other phase coil of the 2-phase stepping motor 66a via the D/A converter 18 and power amplifier 68c.
As a result, the 2-phase stepping motor 66a rotates in accordance with an output count value of the up/down counter 13, and the pickup 65 moves. It is to be noted that at the time of usual recording/reproducing with respect to the information recording surface of the optical disk 100, the output value of the up/down counter 13 is passed through the digital muting section 52, supplied to the D/A converter 53 of FIG. 6, D/A converted, and amplified by the power amplifier 57 to drive a tracking actuator 72.

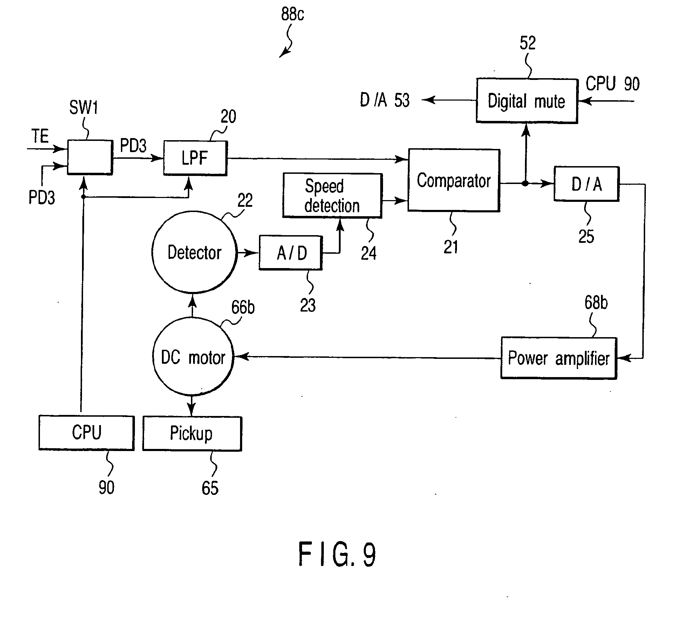

FIG. 9 is a block diagram showing a third embodiment of the feed motor control circuit. The embodiment is suitable for a case where a DC motor 66b is used as the feed motor 66.

A feed motor control section 88c includes: an LPF 20 which filters a difference signal PD3; a detector 22 which detects the rotation of the DC motor 66b; an A/D converter 23 which A/D converts an output signal of the detector 22; a speed detector 24 which detects speed from an output signal of the A/D converter 23;
a comparator 21 which compares an output signal of the LPF 20 with that of the speed detector 24; a D/A converter 25 which D/A converts an output signal of the comparator 21; and a power amplifier 68b which amplifies the power of an output analog signal of the D/A converter 25.

The output signal of the comparator 21 indicates an increase/decrease value with respect to the present speed of the pickup 65. Acceleration of the pickup 65 is controlled in accordance with a size and direction of a distance to the target position. It is to be noted that at the time of usual recording/reproducing with respect to the information recording surface of the optical disk 100, an output signal of the comparator 21 is passed through the digital muting section 52, supplied to the D/A converter 53 of FIG. 6, D/A converted, and amplified by the power amplifier 57 to drive the tracking actuator 72.

As described above, according to the present invention, in an optical disk apparatus capable of recording a visible image on an optical disk printable by laser beam, a position of the disk in a radial direction on a label recording surface of a pickup can be easily controlled without using any new position control circuit.

Although the present invention has been described using a DVD as an example for the realization of the present invention it should be stressed that the present invention is not limited to this kind of information storage medium and that other kinds of information storage media not fulfilling the DVD specification can be used to implement the concept of the present invention as well.

## Claims

1. An optical disk apparatus to record and reproduce information with respect to an optical disk having a label recording surface capable of recording a visible image by use of laser beam, and an information recording surface on which the information is formed as recording marks on a track;
said apparatus comprising:
an optical pickup (65) including a tracking actuator which is adapted to change a position of the laser beam in a tracking direction to record and reproduce the information with respect to the optical disk by the use of the laser beam;
a tracking error detection circuit (85) which is adapted to detect deviation of the laser beam from the track to provide a tracking error signal;
a feed motor (66) which is adapted to move the pickup in a radial direction of the optical disk;
a feed control section (68) which is configured to control the feed motor in such a manner that the position of the control pickup (65) in the radial direction is a target position at the times of the recording and reproducing of the information with respect to the information recording surface;
a differential circuit (59) which is adapted to provide a difference signal indicating a difference between the position of the optical pickup in the radial direction on the optical disk and a target position; said apparatus
further comprising
selecting unit (SW1) which is adapted to select one of the difference signal supplied from the differential circuit and the tracking error signal supplied from the tracking error detection circuit; and
a tracking and feed motor control section (88) which is adapted to control the tracking actuator (72) on the basis of the tracking error signal selected by the selecting unit (SW1) in such a manner that the laser beam follows the track on the rotating disk at the times of the recording and reproducing of the information with respect to the information recording surface, and controls the feed motor on the basis of the difference signal selected by selecting unit (SW1) in such a manner that the position of the optical pickup (65) in the radial direction is a target position at the time of label recording with respect to the label recording surface; **characterized in that**
the tracking and feed motor control section (88) comprises an A/D converter (50) adapted to be used both for the feed motor control at the time of the label recording and the tracking control, which is adapted to analog-to-digital convert the signal selected by the selecting unit.

2. The optical disk apparatus according to claim 1, wherein the tracking and feed motor control section (88) comprises a digital signal processing section (51) shared by the tracking control and the feed motor control, which is adapted to process a digital signal provided from the A/D converter (50).

3. The optical disk apparatus according to claim 1, wherein the tracking and feed motor control section (88) comprises muting unit which is adapted to mute a driving signal with respect to the tracking actuator (72) at the time of the label recording with respect to the label recording surface.

## Patentansprüche

1. Optikplattenvorrichtung, um Information mit Bezug auf eine Optikplatte aufzuzeichnen und wiederzugeben, die eine Labelaufzeichnungsoberfläche, die in der Lage ist, ein sichtbares Bild durch den Laserstrahl aufzuzeichnen, und eine Informationsaufzeichnungsoberfläche, auf der Information als Aufzeichnungsmarken auf einer Spur gebildet wird, aufweist;
wobei die Vorrichtung umfasst:
eine optische Aufnahmeeinrichtung (65) mit einem Spuraktuator, der angepasst ist, um eine Position des Laserstrahls in einer Spurrichtung zu ändern, um die Information mit Bezug auf die Optikplatte mittel des Laserstrahls aufzuzeichnen und wiederzugeben;
eine Spurfehlererfassungsschaltung (85), die angepasst ist, um die Abweichung des Laserstrahls von der Spur zu erfassen, um ein Spurfehlersignal bereitzustellen;
einen Vorschubmotor (66), der angepasst ist, um die Aufnahmeeinrichtung in einer radialen Richtung der Optikplatte zu bewegen;
einen Vorschubsteuerabschnitt (68), der konfiguriert ist, um den Vorschubmotor auf eine derartige Art und Weise zu steuern, dass die Position der optischen Aufnahme Vorrichtung (65) in der radialen Richtung eine Zielposition zur Zeit der Aufzeichnung und Wiedergabe der Information mit Bezug auf die Informationsaufzeichnungsoberfläche ist;
eine Differentialschaltung (59), die angepasst ist, um ein Differenzsignal bereitzustellen, das eine Differenz zwischen der Position der optischen Aufnahmevorrichtung in der radialen Richtung auf der Optikplatte und einer Zielposition angibt; wobei die Vorrichtung ferner umfasst
eine Auswahleinheit (SW1), die angepasst ist, um das von der Differentialschaltung gelieferte Differenzsignal oder das von der Spurfehlersignalerfassungsschaltung gelieferte Spurfehlersignal auszuwählen; und
einen Spur- und Vorschubmotor-Steuerabschnitt (88), der angepasst ist, um den Spuraktuator (72) auf der Grundlage des durch die Auswahleinheit (SW1) ausgewählten Spurfehlersignal so zu steuern, dass der Laserstrahl der Spur auf der sich drehenden Platte zur Zeit der Aufzeichnung und der Wiedergabe der Information mit Bezug auf die Informationsaufzeichnungsoberfläche folgt, und den Vorschubmotor auf der Grundlage des durch die Auswahleinheit (SW1) ausgewählten Differenzsignals auf eine derartige Art und Weise steuert, dass die Position der optischen Aufnahmevorrichtung (65) in der radialen Richtung eine Zielposition zur Zeit der Labelaufzeichnung mit Bezug auf die Labelaufzeichnungsoberfläche ist;
**dadurch gekennzeichnet, dass**
der Spur- und Vorschubmotorsteuerabschnitt (88) einen A/D-Wandler (50) umfasst, der angepasst ist, um sowohl für die Vorschubmotorsteuerung zur Zeit der Labelaufzeichnung als auch der Spursteuerung verwendet zu werden, und der angepasst ist, das durch die Auswahleinheit ausgewählte Signal A/Dumzuwandeln.

2. Optikplattenvorrichtung gemäß Anspruch 1, bei der der Spur- und Vorschubmotor-Steuerabschnitt (88) einen Digitalsignalverarbeitungsabschnitt (51) umfasst, der durch die Spursteuerung und die Vorschubmotorsteuerung gemeinsam genutzt wird, und der angepasst ist, um ein von dem A/D-Wandler (50) bereitgestelltes Digitalsignal zu verarbeiten.

3. Optikplattenvorrichtung gemäß Anspruch 1, bei der der Spur- und Vorschubmotor-Steuerabschnitt (88) eine Stummschaltungseinheit umfasst, die angepasst ist, um ein Treibersignal mit Bezug auf den Spuraktuator (72) zur Zeit der Labelaufzeichnung mit Bezug auf die Labelaufzeichnungsoberfläche stummzuschalten.

## Revendications

1. Dispositif pour disque optique, adapté pour enregistrer et reproduire des informations par rapport à un disque optique comprenant une surface d'enregistrement d'étiquette qui est apte à enregistrer une image visible au moyen d'un faisceau laser, et une surface d'enregistrement d'informations sur laquelle les informations sont formées en tant que des repères d'enregistrement sur une piste ;
ledit dispositif comprenant :
une tête de lecture optique (65) comprenant un organe de commande de suivi qui est adapté pour changer une position du faisceau laser dans une direction de suivi pour enregistrer et reproduire les informations par rapport au disque optique en utilisant le faisceau laser ;
un circuit de détection d'erreur de suivi (85) qui est adapté pour détecter une déviation du faisceau laser par rapport à la piste, de façon à générer un signal d'erreur de suivi ;
un moteur d'avance (66) qui est adapté pour déplacer la tête de lecture dans une direction radiale du disque optique ;
une section de commande d'avance (68) qui est configurée pour commander le moteur d'avance de telle sorte que la position de la tête de lecture optique (65) dans la direction radiale soit une position cible au moment de l'enregistrement et de la reproduction des informations par rapport à la surface d'enregistrement d'information ;
un circuit différentiel (59) qui est adapté pour générer un signal de différence indiquant une différence entre la position de la tête de lecture optique dans la direction radiale sur le disque optique et une position cible ;
ledit dispositif comprenant par ailleurs :
une unité de sélection (SW1) qui est adaptée pour sélectionner un du signal de différence délivré en sortie par le circuit différentiel et du signal d'erreur de suivi délivré en sortie par le circuit de détection d'erreur de suivi ; et
une section de commande de moteur d'avance et de suivi (88) qui est adaptée pour commander l'organe de commande de suivi (72) sur la base du signal d'erreur de suivi sélectionné par l'unité de sélection (SW1) de telle manière que le faisceau laser suive la piste sur le disque en rotation au moment de l'enregistrement et de la reproduction des informations par rapport à la surface d'enregistrement d'informations, et qui commande le moteur d'avance sur la base du signal de différence sélectionné par l'unité de sélection (SW1) de telle manière que la position de la tête de lecture optique (65) dans la direction radiale soit une position cible au moment de l'enregistrement d'étiquette par rapport à la surface d'enregistrement d'étiquette ;
**caractérisé en ce que** la section de commande de moteur d'avance et de suivi (88) comprend un convertisseur A / N (50) qui est adapté pour être utilisé à la fois pour la commande du moteur d'avance au moment de l'enregistrement d'étiquette, et pour la commande de suivi - ce convertisseur étant adapté pour convertir d'analogique en numérique le signal sélectionné par l'unité de sélection.

2. Dispositif pour disque optique selon la revendication 1, dans lequel la section de commande de moteur d'avance et de suivi (88) comprend une section de traitement de signaux numériques (51) qui est partagée par la commande de suivi et la commande du moteur d'avance - section qui est adaptée pour traiter un signal numérique généré par le convertisseur A / N (50).

3. Dispositif pour disque optique selon la revendication 1, dans lequel la section de commande de moteur d'avance et de suivi (88) comprend une unité de silencieux qui est adaptée pour mettre au silence un signal de commande par rapport à l'organe de commande de suivi (72) au moment de l'enregistrement d'étiquette par rapport à la surface d'enregistrement d'étiquette.
